# EUROPEAN PATENT SPECIFICATION

(11) **EP 0 593 240 B1**
(45) Date of publication and mention of the grant of the patent: **31.01.2001**
(21) Application number: 93308075.6
(22) Date of filing: 11.10.1993
(51) Int. Cl.: C04B 35/575, C04B 35/593, C04B 35/599

(54) **Low-friction ceramic**
Keramik geringer Reibung
Céramique ayant une friction diminuée

(30) Priority: 14.10.1992 JP 30064292
(43) Date of publication of application: 20.04.1994
(73) Proprietor: ISUZU CERAMICS RESEARCH INSTITUTE CO., LTD., Fujisawa-shi, Kanagawa-ken (JP)
(72) Inventor: Unno, Yasuaki, Yamato-shi, Kanagawa-ken, T242 (JP); Kita, Hideki, Fujisawa-shi, Kanagawa-ken, T251 (JP); Yamamuro, Hideo, Kawasaki-shi, Kanagawa-ken, T210 (JP)
(74) Representative: Jenkins, Peter David

(56) References cited:
- EP-A- 0 392 381
- EP-A- 0 479 214
- US-A- 4 332 909

## Description

The present invention relates to a low-friction ceramic which comprises a matrix phase of a nonoxide ceramic containing silicon.

A method of decreasing the coefficient of friction of ceramics by dispersing silicon carbide (SiC) and boron nitride (BN) in silicon nitride (Si₃N₄) is disclosed, for example, in Japanese Patent Laid-Open No. 30769/1984. Si₃N₄ containing an iron oxide such as Fe₃O₄ as a sintering aid is disclosed, for example, in Japanese Patent Laid-Open Nos. 64268/1983, 88374/1984 [GB No. 8228174 (application date: October 1, 1982)] and 72685/1986 [US No. 631269 (application date: July 16, 1984)].

Japanese Patent Laid-Open No. 30769/1984 discloses a silicon nitride sinter having a low coefficient of friction. For the purpose of improving the slipperiness at elevated temperatures of the sinter, a filler is dispersed as a solid lubricant in the matrix of the sinter, the filler containing at least one member selected from among carbon, BN and SiC containing free carbon.

Japanese Patent Laid-Open No. 64268/1983 discloses a silicon nitride sinter and a process for producing the same. The sinter is prepared by sintering in a nonoxidative atmosphere a powdery mixture comprising 1 to 20% by weight of a powder of at least one oxide selected from among Fe₂O₃, CaO, TiO₂, MgO, Al₂O₃, BeO, NiO, Cr₂O₃, ZrO₂, Y₂O₃, CoO₂ and SiO₂, 5 to 40% by weight of a powder of at least one silicide selected from among those of metals including Ca, Ti, Zr, Nb, Ta, Cr, Mo, W, Fe, Co, Ni and Y, and the balance comprising Si₃N₄ powder.

Japanese Patent Laid-Open No. 88374/1984 discloses a process for producing a silicon nitride ceramic. The ceramic is prepared by sintering a compact comprising Si₃N₄ and at least one oxide sintering aid selected from the oxides of metals including Mg, Y, Cr, Mo, Fe, Mn, W, Co, V, U, Ni, Ti, Hf, Zr, Nb and Ta.

Japanese Patent Laid-Open No. 72685/1986 discloses a corrosion-resistant silicon nitride body. The body comprises about 3 to 18% by weight of lanthanum oxide, about 0.5 to 5% by weight of aluminum oxide, about 2% by weight of Fe, about 0.2 to 5% by weight of C, Ca, Al or an oxide thereof and the balance comprising Si₃N₄, and has a relatively high corrosion-resistance against phosphoric acid.

EP-A-0392381 and EP-A-0479214 disclose silicon nitride ceramics having varying ranges of silicides of iron, cobalt or nickel.

US-A-4332909 discloses a silicon nitride based sintered product, having, inter alia, self-lubrication.

A silicon nitride ceramic is required to have a low coefficient of friction when used as an engine part. In general, Si₃N₄ containing SiC, BN or an oxide each dispersed therein is poor in the reactivity in the bonding interface and exhibits inferior strength, thus causing unfavorable results. The Si₃N₄ containing an iron oxide such as Fe₃O₄ as a sintering aid,as disclosed in each of the above patent documents, is poor in the amount of oxide and cannot attain the characteristic of low friction.

It is an aim of the present invention to solve the aforestated problems and provide a low-friction ceramic which has a low coefficient of friction and high strength by adding an iron oxide such as FeO, Fe₂O₃ or Fe₃O₄ in a given amount in the matrix phase of a nonoxide ceramic containing silicon to disperse the iron compound in said phase and thereby improve the ability to absorb oils for the purpose of lowering the coefficient of friction of the nonoxide ceramic which contains one of SiC, Si₃N₄, a composite material of SiC and Si₃N₄, sialon (Si-Al-O-N) or Si-O-N.

The present invention provides a low-friction ceramic comprising one member selected from the group consisting of silicon nitride, silicon carbide, a composite material of silicon nitride and silicon carbide, Si-Al-O-N and Si-O-N as a matrix phase and a second phase composed of an iron-silicon compound dispersed in said matrix phase, said second phase having a particle size of at most 5 µm and being contained in said ceramic in an amount of from more than 5% to 20% by weight in terms of iron oxides which have been added during formation of the ceramic to provide the source of iron for the iron-silicon compound.

The present invention also provides for the use of a ceramic having the composition set out above for low friction applications.

The present invention further provides a process for making the lower friction ceramic of the invention which comprises adding the iron oxides during formation of the ceramic to provide the source of iron for the iron-silicon compound for low friction applications.

Embodiments of the present invention will now be described by way of example only with reference to the accompanying drawings, in which:-

Fig. 1 is a graph showing the coefficient of friction vs. the loading of iron oxide for the low-friction ceramic according to the present invention.

Fig. 2 is a graph showing the average four-point flexural strength vs. the loading of iron oxide for the low-friction ceramic according to the present invention.

Fig. 3 is a graph showing the relationship between the coefficient of friction and the parameter including the load, velocity and viscosity of lubricating oil with respect to the loading of iron oxide for the low-friction ceramic according to the present invention.

Fig. 4 is an enlarged view by 5000 × magnification of the structure of a sliding test piece of the low-friction ceramic according to the present invention by SEM (scanning electron microscopy).

Fig. 5 is an enlarged view by 1000 × magnification of the structure of a sliding test piece of the low-friction ceramic according to the present invention by SEM.

Fig. 6 is a graph showing the X-ray micro qualitative analysis results of a sliding test piece of the low-friction ceramic according to the present invention.

Examples of the low-friction ceramic according to the present invention will now be described with reference to the attached drawings. The low-friction ceramic according to the present invention is a nonoxide ceramic containing silicon to which is imparted a low coefficient of friction without lowering the strength and comprises the above-mentioned nonoxide ceramic as the matrix phase and an iron compound dispersed therein. The nonoxide ceramic containing silicon is one of SiC, Si₃N₄, a composite material of SiC and Si₃N₄, sialon Si-Al-O-N and Si-O-N. Preferred materials are SiC and Si₃N₄. The size of the particles of the iron compound is 5 µm or smaller. The content of the iron compound in the ceramic is from more than 5% to 20% by weight in terms of FeO, Fe₂O₃ or Fe₃O₄ so as not to appreciably decrease the strength of the ceramic.

The low-friction ceramic according to the present invention can be produced in the following way.

In Example 1, the low-friction ceramic according to the present invention was produced through the following steps. At first, Si₃N₄, Al₂O₃ and Y₂O₃ were blended in the proportion of 90:5:5, to which were added three iron compounds, FeO, Fe₂O₃ and Fe₃O₄, each in a given amount distilled water and a binder, and mixed in a ball mill for about 24 hours. The resultant mixture was granulated with a spray dryer to produce various granular products having different loadings of the iron compounds.

Then, the products thus granulated were preformed in a mold having inside dimensions of 25×20×100 mm and the resultant preforms were each molded into the form of a rectangular parallelopiped by CIP under a pressure of about 2000 kgf/cm². The resultant moldings were degreased and then fired by heating to a maximum temperature of 1850°C in a nitrogen atmosphere at 9.3 MPa to produce various dense sinters.

The sinters produced through the above-mentioned steps were machined and polished into test pieces in the form of rectangular parallelopipeds with dimensions of 16×10×70 mm to carry out a sliding test. As the mating members, that is, the mating sliding test pieces for performing the sliding test of the sinters, Si₃N₄ sinters having a relative density of 99% or more were produced and made into pins having spherical surfaces with a 9 mm radius of curvature at the end surfaces thereof.

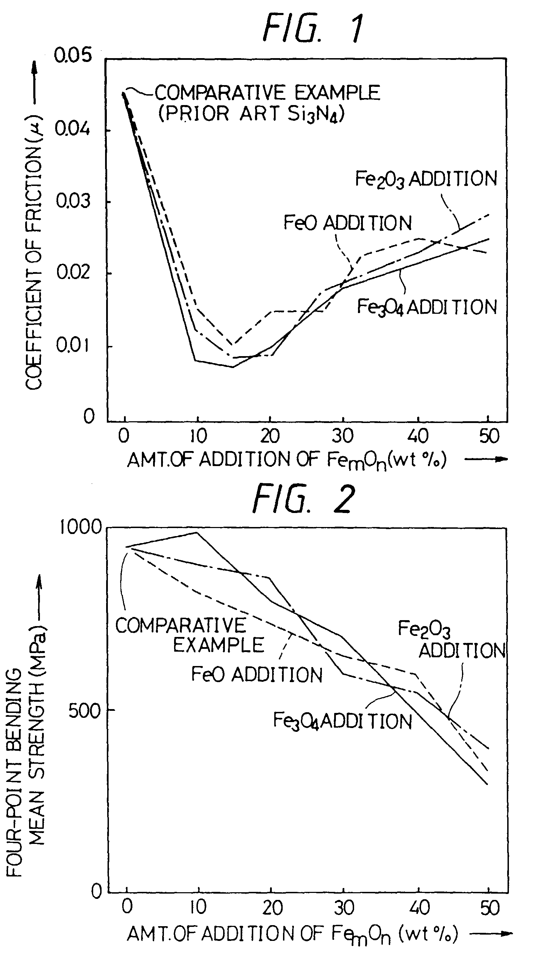

One of the pins as the mating sliding test piece was set almost perpendicular to one surface of the respective rectangular parallelopiped sliding test pieces, and the coefficient of friction between the test pieces was measured under the sliding test conditions at a load of 1.0 kgf, temperature of 150°C, and sliding velocity of 1.0 m/sec, while a synthetic oil excellent in heat resistance was used as the lubricating oil. Fig. 1 gives the test results in which various iron compounds, FeₘOₙ (FeO, Fe₂O₃ and Fe₃O₄), were added to Si₃N₄ in various amounts. As can be seen from Fig. 1, an amount of FeₘOₙ added to Si₃N₄ in the range of 10 to 20% by weight results in a coefficient of friction, µ, as low as about 0.01, whereas an amount thereof exceeding 20% by weight tends to increase the coefficient of friction to some extent. The contact angle of a dense sinter selected from the sinters against the lubricating oil was measured. As a result, it was confirmed that the composite material had a small contact angle and thus exhibited excellent adsorptivity. In addition, from an observation of its texture, pores were seen in the composite material having a larger amount of added iron oxide (40% by weight or more), presumably because of the increased coefficient of friction by the interlock with the mating surfaces during sliding. In Fig. 1, zero FeₘOₙ loading refers to conventional Si₃N₄ as a comparative example.

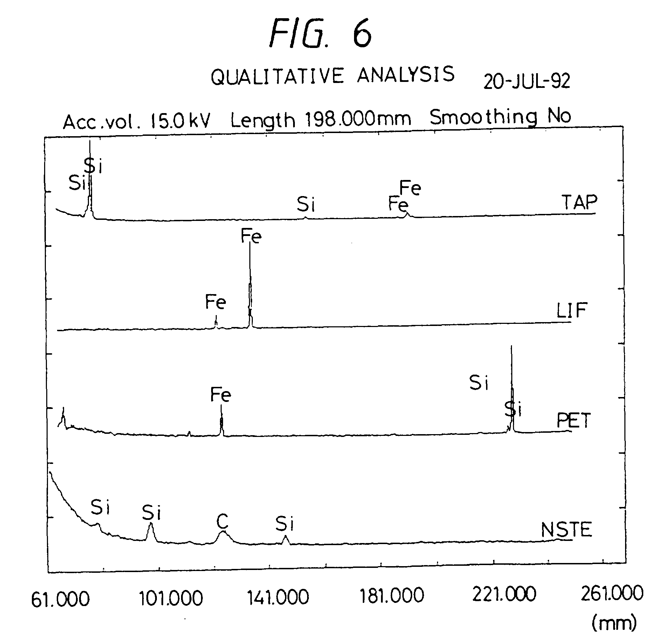

Subsequently, identification of the phase present in Si₃N₄ was made by X-ray micro qualitative analysis for the iron oxide loading of 10% and 20%by weight, respectively. As the result, the phase proved to be composed of an iron-silicon compound as shown in Fig. 6. This compound presumably has an excellent ability to adsorb lubricating oil.

The rectangular parallelopiped sliding test pieces produced in the aforesaid manner were machined to prepare test pieces for the 4-point flexural test to thereby measure the flexural strength. The results are given in Fig. 2, from which it can be seen that the strength decreases with an increase in the amount of added FeₘOₙ. It has been proved by the 4-point flexural test that Si₃N₄ containing 10 to 20% by weight of added FeₘOₙ has a strength equal to or higher than that of the Si₃N₄ containing no FeₘOₙ. In Fig. 2, zero FeₘOₙ loading refers to conventional Si₃N₄ as a comparative example.

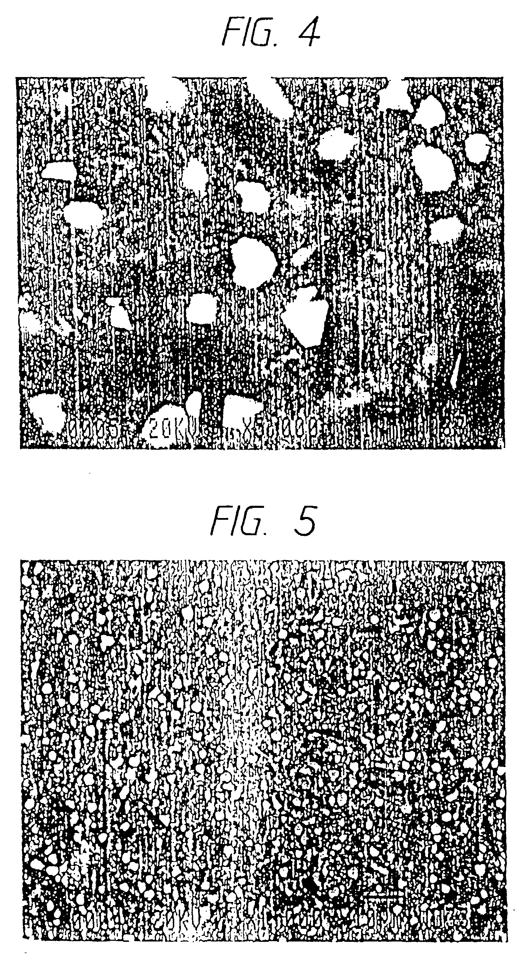

The texture of each of the sliding test pieces having 10 to 20% by weight of added FeₘOₙ was observed by SEM. Fig. 4 with 5000 × magnification and Fig. 5 with 1000 × magnification show the structure of the sliding test pieces having 10% by weight of added FeₘOₙ The white parts in the Figures indicate the presence of an iron-silicon compound. It has been proved that in the sliding test pieces having 10% by weight ofadded FeₘOₙ, the iron-containing portion does not form solid solution but exists in a dispersed state. It has also been proved that in the texture of the sliding test pieces, scarcely any pores are observed, the growth of crystal grains is suppressed by the iron compound and fine crystal grains remain uniformized. Such a texture is believed to be advantageous in enhancing strength taking Griffith's formula into consideration.

The sliding test pieces containing more than 10% by weight of added FeₘOₙ are decreased in strength. As the result of the observation of the texture in the same manner, the aggregation of FeₘOₙ was recognized and pores were present in the site of aggregation. It is conceivable that the decrease in the strength of the sliding test pieces is due to the presence of pores causing the initiation of fracture.

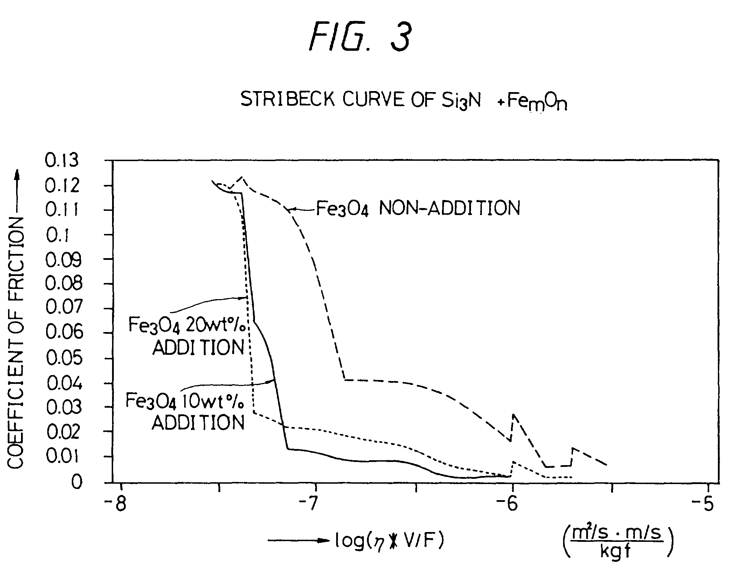

By plotting parameters including the load and velocity of the sliding test pieces and the viscosity of the lubricating oil as the abscissa, the coefficients of friction were measured under various conditions. The results are given in Fig. 3, in which the parameter P is represented by the formula P = log (η × V/F) in the unit of [(m²/S)·(m/S)/kgf], wherein η is the viscosity of the lubricating oil, V is the velocity and F is the coefficient of friction. As can be seen from Fig. 3, the test pieces containing added FeₘOₙ are effective in decreasing the friction in the mixed lubricating region as compared with Si₃N₄ containing no added FeₘOₙ.

Next, another example of the low-friction ceramic according to the present invention will be described with reference to Example 2. In Example 2, SiC powder, boron as a sintering aid and Fe₃O₄ were blended in given proportions to prepare a low-friction ceramic. The blend was mixed with twice as much distilled water in the same manner as that of Example 1 to prepare a mixture, which was then granulated with a spray dryer to produce a granular product. In the same manner as that of Example 1, the product was sintered and used to produce test pieces. Measurements were made of the slipperiness and strength of each test piece with the results described hereunder.

The test pieces having 10% and 20% by weight of added Fe₃O₄ had a coefficient of friction (µ) of 0.015 and 0.024, respectively, and a strength of 478 MPa and 490 MPa, respectively. The test piece having the increased amount of added Fe₃O₄ of 30% by weight had a coefficient of friction (µ) of 0.033 and a strength of 463 MPa.

The test piece, containing no added Fe₃O₄ had a coefficient of friction of 0.039 and a strength of 560 MPa.

As described above, the low-friction ceramic produced in Example 2 was somewhat inferior to that produced in Example 1 with respect to strength, but exhibited the composite effect of the added iron oxide.

Next, for the purpose of comparing the low-friction ceramic according to the present invention with the conventional ceramic, comparative test pieces of Si₃N₄ containing BN in place of iron oxide were produced in the same manner as that of Example 1 as Comparative Example 1.

The slipperiness and strength of the comparative test pieces were measured with the results being described hereunder. For the same purpose, comparative test pieces of Si₃N₄ containing SiC in place of iron oxide were produced in the same manner as that of Example 1 as Comparative Example 2. The slipperiness and strength of the comparative test pieces were measured with the results being described hereunder.

In Comparative Example 1, the coefficients of friction (µ) were 0.018, 0.026 and 0.032, respectively, and the strengths were 560, 420 and 116 MPa, respectively, for the addition of BN in amounts of 10, 15 and 20% by weight, respectively.

In Comparative Example 2, the coefficients of friction (µ) were 0.025, 0.033 and 0.046, respectively, and the strengths were 768, 645 and 472 MPa, respectively, for the addition of SiC in amounts of 10, 15 and 20% by weight, respectively.

It has been proved, therefore, that the comparative test pieces of Si₃N₄ containing BN and containing SiC respectively are markedly inferior in strength and provide a smaller decrease in the coefficient of friction (µ) as compared with the low-friction ceramic according to the present invention.

## Claims

1. A low-friction ceramic comprising:
one member selected from the group consisting of silicon nitride, silicon carbide, a composite material of silicon nitride and silicon carbide, Si-Al-O-N and Si-O-N as a matrix phase; and
a second phase composed of an iron-silicon compound dispersed in said matrix phase, said second phase having a particle size of at most 5 µm and being contained in said ceramic in an amount of from more than 5% to 20% by weight in terms of iron oxides which have been added during formation of the ceramic to provide the source of iron for the iron-silicon compound.

2. The low-friction ceramic as claimed in claim 1, wherein the matrix phase comprises silicon nitride and further comprises aluminium oxide and yttrium oxide.

3. The low-friction ceramic as claimed in claim 2, wherein the compound containing iron and silicon is dispersed in the matrix phase in an amount of from 10 to 20 % by weight in terms of iron oxides.

4. The low-friction ceramic as claimed in any one of claims 1 to 3, wherein the low-friction ceramic is substantially pore free.

5. Use of an iron oxide such as FeO, Fe₂O₃ or Fe₃O₄ as a source of iron in a phase composed of an iron-silicon compound having a particle size of at most 5µm dispersed in a matrix phase of a low-friction ceramic, the matrix phase comprising one member selected from the group consisting of silicon nitride, silicon carbide, Si-Al-O-N and Si-O-N, and the dispersed phase being contained in the ceramic in an amount of from more than 5% to 20% by weight in terms of iron oxides for improving the dispersion of the iron-silicon compound in the matrix phase.

6. A process for making a low-friction ceramic according to any one of claims 1 to 4, the process comprising adding the iron oxides during formation of the ceramic to provide the source of iron for the iron-silicon compound for low friction applications.

## Patentansprüche

1. Keramik mit geringer Reibung, die enthält:
einen Bestandteil, der aus der Gruppe gewählt ist, welche aus Siliziumnitrid, Siliziumkarbid, einem zusammengesetzten Material von Siliziumnitrid und Siliziumkarbid, Si-Al-O-N und Si-O-N besteht, als Matrixphase; und
eine zweite Phase, die aus einer Eisen-Siliziumverbindung besteht und in der Matrixphase dispergiert ist, wobei die zweite Phase eine Teilchengröße von höchstens 5 µm besitzt und in der Keramik in einer Menge von mehr als 5 bis 20 Gew.-% auf der Basis von Eisenoxiden enthalten ist, die während der Ausbildung der Keramik beigefügt worden sind, um die Eisenquelle für die Eisen-Siliziumverbindung zu bilden.

2. Keramik mit geringer Reibung nach Anspruch 1, bei welcher die Matrixphase Siliziumnitrid und ferner Aluminiumoxid und Yttriumoxid enthält.

3. Keramik mit geringer Reibung nach Anspruch 2, bei welcher die Eisen und Silizium enthaltende Verbindung in der Matrixphase in einer Menge von 10 bis 20 Gew.-% auf der Basis von Eisenoxiden dispergiert ist.

4. Keramik mit geringer Reibung nach einem der Ansprüche 1 bis 3, bei welcher die Keramik mit geringer Reibung im wesentlichen porenfrei ist.

5. Verwendung eines Eisenoxids, wie FeO, Fe₂O₃ oder Fe₃O₄ als Eisenquelle in einer Phase, die aus einer Eisen-Siliziumverbindung mit einer Teilchengröße von höchstens 5 µm, dispergiert in einer Matrixphase einer Keramik mit geringer Reibung, besteht, wobei die Matrixphase einen Bestandteil enthält, der aus der Gruppe gewählt ist, die aus Siliziumnitrid, Siliziumkarbid, Si-Al-O-N und Si-O-N besteht, und die dispergierte Phase in der Keramik in einer Menge von mehr als 5 bis 20 Gew.-% auf der Basis von Eisenoxiden enthalten ist, um die Dispersion der Eisen-Siliziumverbindung in der Matrixphase zu verbessern.

6. Verfahren zur Herstellung einer Keramik mit geringer Reibung nach einem der Ansprüche 1 bis 4, wobei das Verfahren umfaßt: Zugeben der Eisenoxide während der Ausbildung der Keramik, um die Eisenquelle für die Eisen-Siliziumverbindung für Anwendungen mit geringer Reibung zu bilden.

## Revendications

1. Matière céramique à faible coefficient de frottement, comprenant :
un membre choisi dans le groupe consistant en le nitrure de silicium, le carbure de silicium, un composite de nitrure de silicium et de carbure de silicium, Si-Al-O-N et Si-O-N comme phase de matrice ; et
une seconde phase constituée d'un composé de fer-silicium dispersée dans ladite phase de matrice, ladite seconde phase ayant un diamètre de particules d'au plus 5 µm et étant présente dans ladite matière céramique en une quantité de plus de 5 % à 20 % en poids en termes d'oxydes de fer qui ont été ajoutés au cours de la formation de la matière céramique pour fournir la source de fer pour le composé de fer-silicium.

2. Matière céramique à faible coefficient de frottement suivant la revendication 1, dans laquelle la phase de matrice comprend du nitrure de silicium et comprend en outre de l'oxyde d'aluminium et de l'oxyde d'yttrium.

3. Matière céramique à faible coefficient de frottement suivant la revendication 2, dans laquelle le composé contenant du fer et du silicium est dispersé dans la phase de matrice en une quantité de 10 à 20 % en poids en termes d'oxydes de fer.

4. Matière céramique à faible coefficient de frottement suivant l'une quelconque des revendications 1 à 3, ladite matière céramique à faible coefficient de frottement étant pratiquement dépourvue de pores.

5. Utilisation d'un oxyde de fer tel que FeO, Fe₂O₃ ou Fe₃O₄ comme source de fer dans une phase constituée d'un composé de fer-silicium ayant un diamètre de particules d'au plus 5 µm dispersée dans une phase de matrice d'une matière céramique à faible coefficient de frottement, la phase de matrice comprenant un membre choisi dans le groupe consistant en le nitrure de silicium, le carbure de silicium, Si-Al-O-N et Si-O-N, et la phase dispersée étant présente dans la matière céramique en une quantité de plus de 5 % à 20 % en poids en termes d'oxydes de fer pour améliorer la dispersion du composé de fer-silicium dans la phase de matrice.

6. Procédé de préparation d'une matière céramique à faible coefficient de frottement suivant l'une quelconque des revendications 1 à 4, ce procédé comprenant l'addition des oxydes de fer au cours de la formation de la matière céramique pour fournir la source de fer pour le composé de fer-silicium destiné aux applications à faible coefficient de frottement.
